# EUROPEAN PATENT APPLICATION

(11) **EP 4 311 436 A1**
(43) Date of publication of application: **31.01.2024**
(21) Application number: 22186992.8
(22) Date of filing: 26.07.2022
(51) Int. Cl.: A23G 3/34, A23G 3/54, A23G 4/10, A23G 4/20

(54) **EDIBLE PRODUCT COATING USING PREGELATINISED STARCHES**

(71) Applicant: Südzucker AG, 68165 Mannheim (DE)
(72) Inventor: HASSLINGER, Bernd, 67283 Obrigheim (DE); ZSEMBERY, Roland, 67283 Obrigheim (DE); BAUER, Christian, 67283 Obrigheim (DE)
(74) Representative: Schrell, Andreas

(57) **Abstract**

The present invention relates to a coated edible product comprising a core and a coating, wherein the coating comprises a pregelatinized starch from rice, potato or tapioca as well as a process for the preparation of said coated edible product.

## Description

The present invention relates to a coated edible product comprising a core and a coating, wherein the coating comprises at least one pregelatinized starch selected from the group consisting of rice starch, potato starch, tapioca starch and combinations thereof, in particular rice starch, in particular wherein the coating contains at least one pregelatinized starch selected from the group consisting of rice starch, potato starch, tapioca starch and combinations thereof, and at most 3,5 wt.-% (based on dry weight of the coating) gum arabic (GA) and to a process for the preparation of said coated edible product.

Generally, an edible coated product comprises an edible core and an edible coating. An edible coating is often defined as a thin layer of edible material, generally not exceeding 0.3 mm, applied to the surface of foods, specifically on the surface of the core, in addition to or as a substitution for natural protective coatings. Such food may be in the form of a confectionary or savoury food, such as a nut, fruit or seed. The coatings are able to form a barrier against moisture, oxygen, UV-light and solute movement of the food. The coating must also be acceptable to consumers, for instance retaining the original taste, texture, and product appearance. Edible coatings are generally classified according to their natural film forming material, that means the matrices, which are for instance polysaccharides, proteins, lipids and waxes, or a mixture of them. Traditional matrix materials are for instance gum arabic, chitosan, alginate or whey protein. Minor components are also included in the formulations - essentially including plasticisers, functional additives, in particular acid based compounds.

Generally, gum arabic is used in coatings for various reasons, in particular as an additive providing elasticity and viscosity.

US 8,658,200 B2 discloses a chewing gum comprising at least one active pharmaceutical with a core onto which at least one inner polymer film coating and thereafter at least one outer hard coating is applied comprising gum arabic as film-former and titanium dioxide as colorant inter alia as white colouring agent.

WO 2011/084759 discloses multi-layered chewing gum-candy compositions including a particulate coating composition comprising powdered gum arabic.

WO 97/08958 discloses coated sugar free products, wherein the coating comprises gum arabic and titanium dioxide as colouring agent.

EP 3 417 714 B1 discloses confectionery compositions that include particulate coating compositions which at least partially surround a confectionery core, wherein the particulate coating compositions comprise powdered gum arabic and sugar polyol particulates or saccharide sweetener particulates as well as titanium dioxide as colouring agent.

US 4,681,766 A discloses coating comestibles such as chewing gums and candies with sugarless and sugar coatings from aqueous syrups containing a sweetener, gum arabic and a calcium salt, preferably calcium chloride, as well as optionally titanium dioxide as dispersing agent, which coatings are smooth and non-flaky and crunchy when chewed.

In order to coat edible products, for example a xylitol chewing gum coated dragee, sometimes even two different coating media, in particular coating solutions or suspensions, comprising gum arabic are used. For example, a first coating medium, comprising a relatively low content of gum arabic to build up coating layers and a second coating medium, also called sealing solution, with a higher gum arabic content may be used, the sealing solution being able to wax the surface of the coating layers built up by the first coating medium and leads to a shiny surface of the coated edible product.

However, it is also known that gum arabic, also in best fabric qualities, brings a yellowish colour to the coating medium and thus to the coating as well. Accordingly, additives, in particular white colouring agents, are frequently used to whiten the coating medium and thus also the coating thereby hiding the yellowish colour. The most important white colouring agent used so far for this purpose is titanium dioxide, which is harmful to health and is being substituted by many edible product manufacturers, in particular confectionery product manufacturers. Furthermore, a lot of edible products comprising such additives, in particular white colouring agents, in particular titanium dioxide, cannot be clean labelled. The current situation surrounding the use of titanium dioxide as a food additive, in particular as white colouring agent, is therefore of concern to many customers and substitution solutions are being sought. However, most additives which are eligible to be such substitutes, for example conventional rice starches, do not have as high an opacity, thus hiding power, as titanium dioxide. The colouring function of these substances is, however, severely disturbed by the yellowish colour of the gum arabic. In addition, it is known that gum arabic influences the crystallization of polyols used in the coating medium and the brittleness of the coated layer, which may have adverse effects on the organoleptic and storage properties of the products.

In the field of edible product coating, in particular confectionery product coating, there has been hardly any room for other comparative substances in the more than 100 years of the use of gum arabic.

It is only in recent years, in the course of rationalization and a general drop in prices, that the use of substitutes for well-known matrix materials in food coatings has been promoted. In addition, new findings about the health of food and the mutual influence of food ingredients in the area of appearance and shelf life are increasing the interest and the need for raw materials comparable to known matrix materials, in particular gum arabic, which have the capacity to at least partially replace the matrix materials being in use so far.

WO 2022/002434 A1 discloses a sugar-coated confectionery product comprising a hard crystalline coating comprising a mixture of at least one sweetener and at least one chemically unmodified pregelatinized starch, said coating and said mixture comprising less than 1% by weight of gum arabic relative to the total dry weight of the coating or mixture, and in which said mixture comprises between 80 and 99.90% by weight of said sweetening agent relative to the total mass of dry matter of the mixture, preferably between 90 and 99.90% and between 0.1 and 20% by weight of said starch relative to the total mass of dry matter of the mixture, preferably between 0.1 and 10%. The chemically unmodified pregelatinized starch is a native starch, chosen from chemically unmodified pregelatinized pea starch or chemically unmodified pregelatinized native waxy maize starch. The hard coating obtained according to the teaching of WO 2022/002434 A1, however, suffers still from an unfavourable yellowish appearance and a still not satisfactory whiteness.

The technical problem underlying the present invention therefore is to overcome the aforementioned disadvantages.

In particular, the technical problem underlying the present invention is to provide a coated edible product which coated edible product has an improved optical appearance, in particular improved whiteness and reduced yellowness, while simultaneously exhibits improved or at least similar properties, in particular improved or at least similar organoleptic properties, texture, elasticity, viscosity and/or taste, preferably all of them, as comparative coated edible products, in particular their coatings, in particular those coatings which comprise conventionally used amounts of gum arabic.

In particular, the technical problem underlying the present invention is also to provide a coated edible product comprising as less as possible gum arabic, in particular a reduced amount of gum arabic compared to comparative coated edible products, in its coating, in particular comprising no gum arabic at all, in particular in its coating, and in particular which coated edible product has improved or at least similar properties, in particular similar organoleptic properties, texture, elasticity, viscosity and/or taste, preferably all of them, as comparative coated edible products, in particular their coatings.

A further technical problem underlying the present invention is to provide a coated edible product comprising a coating which does not contain white colouring agents, in particular titanium dioxide, in an amount as high as in coatings of comparable coated edible products.

A further technical problem underlying the present invention is to provide a coated edible product comprising a coating, wherein no white colouring agents, in particular no titanium dioxide, is present.

Preferably, a further technical problem underlying the present invention is to provide a process, preferably a cost-effective and efficient process, to produce such coated edible products.

The technical problem is solved by the teaching of the present invention, in particular the teaching as specified in the independent and dependent claims as well as in the present description.

In particular, the technical problem is solved by a coated edible product comprising a core and a coating, wherein the coating contains at least one pregelatinized starch selected from the group consisting of rice starch, potato starch, tapioca starch and combinations thereof, in particular one pregelatinized starch.

In particular, the technical problem is solved by a coated edible product comprising a core and a coating, wherein the coating contains at least one pregelatinized rice starch, in particular one pregelatinized rice starch.

In particular, the technical problem is solved by a coated edible product comprising a core and a coating, wherein the coating contains at least one pregelatinized starch selected from the group consisting of rice starch, potato starch, tapioca starch and combinations thereof, in particular one pregelatinized starch, and gum arabic (GA), in particular at most 3,5 wt.-% (based on dry weight of the coating) gum arabic.

Accordingly, the coated edible product according to the present invention comprises a core and a coating, both of them being edible, in particular consists of them. According to the present invention, the coating of the coated edible product contains at least one pregelatinized starch selected from the group consisting of rice starch, potato starch, tapioca starch and combinations thereof.

In a preferred embodiment, the coating which comprises at least one pregelatinized starch contains no gum arabic or contains gum arabic.

In a preferred embodiment, the coating of the coated edible product of the present invention comprises at least one pregelatinized starch selected from the group consisting of rice starch, potato starch, tapioca starch and combinations thereof, and contains no gum arabic.

In a preferred embodiment, the coating of the coated edible product of the present invention comprises at least one pregelatinized starch selected from the group consisting of rice starch, potato starch, tapioca starch and combinations thereof, and contains gum arabic.

In case, the coating contains gum arabic, the amount of gum arabic is preferably reduced in comparison to conventionally used amounts of gum arabic in edible products.

In a preferred embodiment, the coating contains at most 3,5 wt.-% (based on dry weight of the coating) gum arabic and comprises at least one pregelatinized starch selected from the group consisting of rice starch, potato starch, tapioca starch and combinations thereof.

Thus, the coating of the coated edible product according to the present invention comprises at least one substance, wherein said at least one substance is a pregelatinized starch selected from the group consisting of rice starch, potato starch, tapioca starch and combinations thereof, and optionally at least one further substance, which can be gum arabic, preferably up to 3,5 wt.-% gum arabic, in particular from 0,1 to 3,5 wt.-% (each based on dry weight of the coating).

In a preferred embodiment, the coating of the coated edible product of the present invention comprises at least one substance, wherein said at least one substance is the at least one pregelatinized starch selected from the group consisting of rice starch, potato starch, tapioca starch and combinations thereof, and wherein the coating contains no gum arabic.

In a preferred embodiment, the at least one pregelatinized starch is a rice starch, preferably waxy or non-waxy, preferably waxy rice starch.

In a preferred embodiment, the at least one pregelatinized starch is a potato starch, preferably waxy or non-waxy, preferably waxy potato starch.

In a preferred embodiment, the at least one pregelatinized starch is a tapioca starch, preferably waxy or non-waxy, preferably waxy tapioca starch.

The present invention provides a coated edible product with favourable organoleptic properties, which are highly acceptable to consumers and can be prepared in a cost-efficient manner.

Surprisingly, coated edible products according to the present invention comprising a pregelatinized starch selected from the group consisting of rice starch, potato starch, tapioca starch and combinations thereof, are characterised by a higher degree of whiteness and lower degree of yellowness compared to comparative coated edible product comprising a pregelatinized starch from other botanical origin such as pea or maize, in particular maize starch, in particular waxy maize starch.

The present invention further provides the advantage that at least a part of the amount, in particular the whole amount, of gum arabic or any other comparable known matrix material in the coating of comparative coated edible products can be replaced by pregelatinized starch selected from the group consisting of rice starch, potato starch, tapioca starch and combinations thereof. A pregelatinized starch selected from the group consisting of rice starch, potato starch, tapioca starch and combinations thereof, advantageously imparts preferably a high elasticity and viscosity to the coating while it does not colour it. Therefore, by using a pregelatinized starch selected from the group consisting of rice starch, potato starch, tapioca starch and combinations thereof, in the coating of the coated edible product according to the present invention, gum arabic or any other comparable known matrix material can be advantageously at least partially, in particular completely, be replaced in comparison to comparative coated edible products. It could surprisingly be shown that replacing gum arabic at least partially, in particular completely, with pregelatinized starch selected from the group consisting of rice starch, potato starch, tapioca starch and combinations thereof, results in coated edible products according to the present invention which have advantageously similar properties, in particular similar organoleptic properties, texture, elasticity, viscosity and/or taste, as comparative coated edible comprising a conventional amount of gum arabic and simultaneously provide the above identified improved optical properties in terms of an improved whiteness and reduced yellowness over other pregelatinized starch containing coated products. Preferably, a coated edible product according to the present invention has advantageously the same elasticity and viscosity as the comparative coated edible product, in particular those known in the art. Additionally, the pregelatinized starch selected from the group consisting of rice starch, potato starch, tapioca starch and combinations thereof, of the coating of the coated product of the present invention does not bring any colouring into the coating.

Preferably, the coating of the coated product of the present invention advantageously does not contain white colouring agents in an amount as high as necessarily used in coatings of comparative coated edible products comprising gum arabic, comprising higher amount of gum arabic or comprising a pregelatinized starch from pea or maize, in particular maize starch, in particular waxy maize starch, in particular does not contain white colouring agents at all. This is without being bound by theory due to the replacement of at least a part of the amount, in particular the whole amount, of gum arabic or the pregelatinized starch from pea or maize, in particular maize starch, in particular waxy maize starch by pregelatinized starch selected from the group consisting of rice starch, potato starch, tapioca starch and combinations thereof in the coating of the coated edible product according to the invention compared to comparative coated edible products. Preferably, due to replacing at least a part of the amount, in particular the whole amount, of gum arabic or the pregelatinized starch from pea or maize starch, in particular maize, in particular waxy maize starch. in comparative coatings of coated edible products by pregelatinized starch selected from the group consisting of rice starch, potato starch, tapioca starch and combinations thereof, there is no need to use the same high amount of white colouring agents as present in coatings of comparative coated edible products, in particular there is no need to use white colouring agents at all. The partial or complete absence of gum arabic or the pregelatinized starch from pea or maize, in particular maize starch, in particular waxy maize starch causes a reduced or even total absence of yellowish colour and, thus, there is no need for the high opacity level, thus hiding power, of white colouring agents.

Further, the use of pregelatinized starch selected from the group consisting of rice starch, potato starch, tapioca starch and combinations thereof, in the production process of a coated edible product provides technological advantages in the production of coated edible products, since it maintains the viscosity of the coating medium in the optimum range. Preferably, the amount of pregelatinized starch selected from the group consisting of rice starch, potato starch, tapioca starch and combinations thereof, required for that purpose is less than the amount of gum arabic conventionally used also for that purpose in coating processes of the art. Thus, pregelatinized starch selected from the group consisting of rice starch, potato starch, tapioca starch and combinations thereof can be used in lower amounts than gum arabic to obtain the same degree of viscosity.

Preferably, a further advantage of the coated edible product of the present invention is that it can be clean labelled, in particular in case no white colouring agent, in particular no titanium dioxide as white colouring agent, in particular no titanium dioxide, is used or in case the white colouring agent is replaced by a white colouring agent which makes a clean labelling possible, for example powdered rice starch, which is not harmful to health. The product of the present invention may in particular be an organic product or a bio-based product.

Preferably, a further advantage of the coated edible product of the present invention is that due to the replacement of at least a part of the amount of gum arabic, preferably the whole amount, by pregelatinized starch selected from the group consisting of rice starch, potato starch, tapioca starch and combinations thereof, the costs for production decreases significantly.

In a preferred embodiment, the coated edible product comprises, in particular consists of, 50 to 90 wt.-%, in particular 60 to 85 wt.-%, in particular 70 to 80 wt.-%, in particular 70 wt.-% core and 10 to 50 wt.-%, in particular 15 to 40 wt.-%, in particular 20 to 35 wt.-%, in particular 28 to 33 wt.-% coating (each based on total weight of coated edible product).

In a preferred embodiment, the coated edible product according to the present invention comprises a core and a coating, wherein the coating comprises at least 0,1 wt.-%, in particular from 0,1 to 20,0 wt.-%, preferably 0,2 to 10,0, preferably 0,2 to 5,0 wt.-%, in particular 0,2 to 2,0 wt.-%, in particular 0,2 to 1,5 wt.-%, in particular 0,3 to 4,0 wt.-%, in particular 0,5 to 2,0 wt.-% of at least one pregelatinized starch selected from the group consisting of rice starch, potato starch, tapioca starch and combinations thereof (each based on dry substance of coating).

In a preferred embodiment, the coated edible product according to the present invention comprises a core and a coating, wherein the coating contains at most 3,5 wt.-%, in particular 0,1 to 3,5 wt.-% (each based on dry weight of the coating) gum arabic and comprises at least one pregelatinized starch selected from the group consisting of rice starch, potato starch, tapioca starch and combinations thereof, in particular at least 0,1 wt.-%, in particular from 0,1 to 20,0 wt.-%, preferably 0,2 to 10,0, preferably 0,2 to 5,0 wt.-% in particular 0,2 to 2,0 wt.-%, in particular 0,2 to 1,5 wt.-%, in particular 0,3 to 4,0 wt.-%, in particular 0,5 to 2,0 wt.-% pregelatinized starch selected from the group consisting of rice starch, potato starch, tapioca starch and combinations thereof (each based on total dry substance of coating).

In a preferred embodiment, the coated edible product comprises a core and a coating, wherein the coating is free of gum arabic and comprises at least one pregelatinized starch selected from the group consisting of rice starch, potato starch, tapioca starch and combinations thereof, in particular at least 0,1 wt.-%, in particular from 0,1 to 20,0 wt.-%, preferably 0,2 to 10,0, preferably 0,2 to 5,0 wt.-% in particular 0,2 to 2,0 wt.-%, in particular 0,2 to 1,5 wt.-%, in particular 0,3 to 4,0 wt.-%, in particular 0,5 to 2,0 wt.-% pregelatinized starch selected from the group consisting of rice starch, potato starch, tapioca starch and combinations thereof (each based on total dry substance of coating).

In a preferred embodiment of the present invention, the coated edible product is a food, in particular a confectionary, baked or savoury product, a pharmaceutical or a nutraceutical.

In a preferred embodiment, the coated edible product is a coated confectionary product, in particular a coated chewing gum, a coated soft candy or a coated chocolate product.

In a preferred embodiment, the coated edible product according to the present invention is a coated savoury product, in particular a coated nut, a coated fruit or a coated edible seed, preferably an almond.

In a preferred embodiment, the coating of the edible product contains in addition to the at least one pregelatinized starch selected from the group consisting of rice starch, potato starch, tapioca starch and combinations thereof, at least one further substance. The at least one further substance may in a preferred embodiment be at least one sweetener, gum arabic, an additive or a combination of two or all three.

In a preferred embodiment, the coating of the coated edible product according to the present invention comprises at least one sweetener.

In a preferred embodiment, the coating of the coated edible product according to the present invention comprises at least one additive, preferably selected from the group consisting of a flavouring, a starch, a high-intensity sweetener, an emulsifier, a colouring agent, in particular a white colouring agent, and a taste modifier.

In a preferred embodiment, the coating of the coated edible product according to the present invention comprises at least one colouring agent, in particular white colouring agent, in particular selected from the group consisting of titanium dioxide, and powdered rice starch.

In a preferred embodiment, the coated edible product according to the present invention comprising the at least one sweetener in the coating is a coated confectionary product.

In a preferred embodiment, the coated edible product according to the present invention comprising at least one sweetener in the coating is a coated savoury product.

In a preferred embodiment, the coated edible product comprises a core and a coating, wherein the coating contains gum arabic, in particular at most 3,5 wt.-%, in particular 0,1 to 3,5 wt.-% (based on dry weight of the coating) gum arabic, and comprises at least one sweetener and at least one pregelatinized starch selected from the group consisting of rice starch, potato starch, tapioca starch and combinations thereof, in particular from 0,1 to 20,0 wt.-%, preferably 0,2 to 10,0, preferably 0,2 to 5,0 wt.-% in particular 0,2 to 2,0 wt.-%, in particular 0,2 to 1,5 wt.-%, in particular 0,3 to 4,0 wt.-%, in particular 0,5 to 2,0 wt.-% pregelatinized starch selected from the group consisting of rice starch, potato starch, tapioca starch and combinations thereof (each based on dry weight of the coating)

In a preferred embodiment, the coated edible product comprises a core and a coating, wherein the coating is free of gum arabic and comprises at least one sweetener and at least one pregelatinized starch selected from the group consisting of rice starch, potato starch, tapioca starch and combinations thereof, in particular at least 0,1 wt.-%, in particular from 0,1 to 20,0 wt.-%, preferably 0,2 to 10,0, preferably 0,2 to 5,0 wt.-% in particular 0,2 to 2,0 wt.-%, in particular 0,2 to 1,5 wt.-%, in particular 0,3 to 4,0 wt.-%, in particular 0,5 to 2,0 wt.-% pregelatinized starch selected from the group consisting of rice starch, potato starch, tapioca starch and combinations thereof (each based on dry weight of the coating).

In a preferred embodiment, the coating of the coated edible product according to the present invention comprises 80,0 to 99,9 wt.-%, preferably 98,5 to 99,8 wt.-% of the at least one sweetener and 0,1 to 20,0 wt.-%, preferably 0,2 to 1,5 wt.-% (each based on dry weight of the coating) of the at least one pregelatinized starch selected from the group consisting of rice starch, potato starch, tapioca starch and combinations thereof.

In a preferred embodiment, the coating of the coated edible product according to the present invention is free of gum arabic and comprises 80,0 to 99,9 wt.-%, preferably 98,5 to 99,8 wt.-% of the at least one sweetener and 0,1 to 20,0 wt.-%, preferably 0,2 to 1,5 wt.-% (each based on dry weight of the coating) of the at least one pregelatinized starch selected from the group consisting of rice starch, potato starch, tapioca starch and combinations thereof.

In another embodiment, the coating of the coated edible product according to the present invention comprises no sweetener.

In a preferred embodiment, the at least one pregelatinized starch selected from the group consisting of rice starch, potato starch, tapioca starch and combinations thereof, of the coated edible product according to the present invention is a pregelatinized native, pregelatinized thermally inhibited or pregelatinized modified starch selected from the group consisting of rice starch, potato starch, tapioca starch and combinations thereof.

In a preferred embodiment, the at least one pregelatinized starch of the coated edible product according to the present invention, in particular one pregelatinized starch, is a pregelatinized waxy starch, in particular pregelatinized waxy rice starch, pregelatinized waxy potato starch, pregelatinized waxy tapioca starch or a mixture thereof.

In a preferred embodiment, the pregelatinized starch of the coated edible product according to the present invention is pregelatinized rice starch, in particular pregelatinized waxy rice starch.

In a preferred embodiment, the at least one pregelatinized starch of the coated edible product according to the present invention is a pregelatinized non-waxy starch, in particular pregelatinized non-waxy rice starch, pregelatinized non-waxy potato starch or pregelatinized non-waxy tapioca starch or mixtures thereof.

In a preferred embodiment, the at least one sweetener of the coated edible product according to the present invention is a sugar alcohol, in particular isomalt, xylitol, maltitol, erythritol, lactitol, mannitol, sorbitol or a combination thereof.

In a preferred embodiment, the at least one sweetener of the coated edible product according to the present invention is isomalt.

In a preferred embodiment, the at least one sweetener of the coated edible product according to the present invention is Isomalt GS.

In a preferred embodiment, the at least one sweetener of the coated edible product according to the present invention is xylitol.

In a preferred embodiment, the at least one sweetener of the coated edible product according to the present invention is a sugar, in particular sucrose, glucose or isomaltulose.

In a preferred embodiment, the at least one sweetener of the coated edible product according to the present invention is isomaltulose.

In a preferred embodiment, the at least one sweetener of the coated edible product according to the present invention is sucrose.

In a preferred embodiment, the coating of the coated edible product according to the present invention contains at most 3,5 wt.-% (based on dry weight of the coating) gum arabic and comprises 80,0 to 99,9 wt.-% of a sweetener, in particular isomalt, in particular Isomalt GS, or xylitol and 0,1 to 20,0 wt.-%, preferably 0,2 to 1,5 wt.-% (each based on dry weight of the coating) of pregelatinized rice starch, in particular pregelatinized waxy rice starch or non-waxy rice starch.

In a preferred embodiment, the coating of the coated edible product according to the present invention is free of gum arabic and comprises 80,0 to 99,9 wt.-%, preferably 98,5 to 99,8 wt.-% of isomalt, in particular Isomalt GS, or xylitol and 0,1 to 20,0 wt.-%, preferably 0,2 to 1,5 wt.-% (each based on dry weight of the coating) pregelatinized rice starch, in particular pregelatinized waxy rice starch or non-waxy rice starch.

In a preferred embodiment, the coating of the coated edible product according to the present invention is free of gum arabic and comprises 90,0 to 99,0 wt.-%, in particular 95,0 to 99,0 wt.-%, in particular 98,8 wt.-% of xylitol and 1,0 to 10,0 wt.-%, in particular 1,0 to 5,0 wt.-%, in particular 1,1 wt.-% of pregelatinized rice starch, in particular pregelatinized non-waxy rice starch or waxy rice starch (each based on dry weight of the coating).

In a preferred embodiment, the coating of the coated edible product according to the present invention is free of gum arabic and comprises 90,0 to 99,5 wt.-%, in particular 95,0 to 99,4 wt.-%, in particular 98,2 wt.-% of xylitol and 0,5 to 10,0 wt.-%, in particular 0,6 to 5,0 wt.-%, in particular 0,8 wt.-% of pregelatinized potato starch, in particular pregelatinized non-waxy potato starch (each based on dry weight of the coating).

In a preferred embodiment, the coating of the coated edible product according to the present invention is free of gum arabic and comprises 90,0 to 99,5 wt.-%, in particular 95,0 to 99,4 wt.-%, in particular 98,2 wt.-% of xylitol and 0,5 to 10,0 wt.-%, in particular 0,6 to 5,0 wt.-%, in particular 0,8 wt.-% of pregelatinized tapioca starch, in particular pregelatinized non-waxy tapioca starch (each based on dry weight of the coating).

In a preferred embodiment, the coating of the coated edible product according to the present invention is free of gum arabic and comprises 90,0 to 99,0 wt.-%, in particular 92,0 to 98,0 wt.-%, in particular 96,0 wt.-% of xylitol, 0,5 to 5,0 wt.-%, in particular 1,0 to 4,0 wt.-%, in particular 1,2 wt.-% of pregelatinized rice starch, in particular pregelatinized non-waxy rice starch or waxy rice starch, and 0,5 to 5,0 wt.-%, in particular 1,0 to 4,0 wt.-%, in particular 3,2 wt.-% additive, in particular powdered rice starch (each based on dry weight of the coating).

In a preferred embodiment, the coating of the coated edible product according to the present invention is free of gum arabic and comprises 90,0 to 99,0 wt.-%, in particular 92,0 to 98,0 wt.-%, in particular 97,0 wt.-% of sucrose, 0,5 to 5,0 wt.-%, in particular 1,0 to 4,0 wt.-%, in particular 1,5 wt.-% of pregelatinized rice starch, in particular pregelatinized non-waxy rice starch or waxy rice starch, and 0,5 to 5,0 wt.-%, in particular 1,0 to 4,0 wt.-%, in particular 1,5 wt.-% additive, in particular titanium dioxide (each based on dry weight of the coating).

In a preferred embodiment, the coating of the coated edible product according to the present invention is free of gum arabic and comprises 90,0 to 99,0 wt.-%, in particular 92,0 to 98,0 wt.-%, in particular 96,6 wt.-% of isomaltulose, 0,5 to 5,0 wt.-%, in particular 1,0 to 4,0 wt.-%, in particular 1,6 wt.-% of pregelatinized rice starch, in particular pregelatinized non-waxy rice starch or waxy rice starch, 0,4 to 4,0 wt.-%, in particular 0,9 to 3,0 wt.-%, in particular 1,6 wt.-% of a first additive, in particular titanium dioxide and 0,1 to 1,0 wt.-%, in particular 0,1 to 0,5 wt.-%, in particular 0,2 wt.-% of a second additive, in particular stevia (each based on dry weight of the coating).

In a preferred embodiment, the coating of the coated edible product according to the present invention is free of gum arabic (GA) and comprises 90,0 to 99,0 wt.-%, in particular 92,0 to 98,0 wt.-%, in particular 95,0 to 97,0 wt.-%, of isomalt, in particular Isomalt GS, 0,5 to 5,0 wt.-%, in particular 1,0 to 4,0 wt.-%, in particular 1,5 to 2,5 wt.-%, of pregelatinized rice starch, in particular pregelatinized non-waxy rice starch or waxy rice starch, and 0,5 to 5,0 wt.-%, in particular 1,0 to 4,0 wt.-%, in particular 1,5 to 2,5 wt.-%, wt.-% of titanium dioxide (each based on dry weight of the coating).

In a preferred embodiment, the coating of the coated edible product according to the present invention is free of gum arabic and comprises 90,0 to 99,0 wt.-%, in particular 92,0 to 98,0 wt.-%, in particular 95,0 to 97,0 wt.-%, of isomalt, in particular Isomalt GS, 0,5 to 5,0 wt.-%, in particular 1,0 to 4,0 wt.-%, in particular 1,5 to 2,5 wt.-%, of pregelatinized rice starch, in particular pregelatinized non-waxy rice starch or waxy rice starch, 0,4 to 4,8 wt.-%, in particular 0,9 to 3,7 wt.-%, in particular 1,4 to 2,3 wt.-%, of titanium dioxide and 0,1 to 0,5 wt.-%, in particular 0,1 to 0,3 wt.-%, in particular 0,1 to 0,2 of a high-intensity sweetener (each based on dry weight of the coating).

In a preferred embodiment, the coating of the coated edible product according to the present invention is free of gum arabic and comprises 90,0 to 99,0 wt.-%, in particular 92,0 to 98,0 wt.-%, in particular 95,0 to 97,0 wt.-%, of xylitol, 0,5 to 5,0 wt.-%, in particular 1,0 to 4,0 wt.-%, in particular 1,5 to 2,5 wt.-%, of pregelatinized rice starch, in particular pregelatinized non-waxy rice starch or waxy rice starch, and 0,5 to 5,0 wt.-%, in particular 1,0 to 4,0 wt.-%, in particular 1,5 to 2,5 wt.-%, of rice starch, in particular powdered rice starch each based on dry weight of the coating).

In further preferred embodiments, the present invention also relates to a process for the preparation of a coated edible product comprising a core and a coating, wherein the coating comprises at least one pregelatinized starch selected from the group consisting of rice starch, potato starch, tapioca starch and combinations thereof, in particular a product according to the present invention, comprising the following process steps:
a) providing a core for an edible product and a coating medium, which coating medium contains the at least one pregelatinized starch selected from the group consisting of rice starch, potato starch, tapioca starch and combinations thereof, and an aqueous medium,
b) coating the core with the coating medium and
c) obtaining the coated edible product.

In a preferred embodiment, the invention relates to a process, wherein the provided and used coating medium contains no gum arabic or contains gum arabic.

In a preferred embodiment, the coating medium of the edible product contains in addition to the at least one pregelatinized starch selected from the group consisting of rice starch, potato starch, tapioca starch and combinations thereof, at least one further substance. The at least one further substance may in a preferred embodiment be at least one sweetener, gum arabic, an additive or a combination of two or all three. Preferably, the at least one further substance is at least one sweetener.

The present invention relates to a process for the preparation of a coated edible product comprising a core and a coating, wherein the coating comprises at least one pregelatinized starch selected from the group consisting of rice starch, potato starch, tapioca starch and combinations thereof, in particular a product according to the present invention, comprising the following process steps:
a) providing a core for an edible product and a coating medium, which coating medium contains the at least one pregelatinized starch selected from the group consisting of rice starch, potato starch, tapioca starch and combinations thereof, at least one sweetener and an aqueous medium,
b) coating the core with the coating medium and
c) obtaining the coated edible product.

Thus, in a preferred embodiment, the coating medium of the coated edible product according to the present invention comprises at least one sweetener.

In a preferred embodiment, the coating medium of the coated edible product according to the present invention comprises at least one additive, preferably selected from the group consisting of a flavouring, a starch, a high-intensity sweetener, an emulsifier, a colouring agent, in particular a white colouring agent, and a taste modifier.

In a preferred embodiment, the coating medium of the coated edible product according to the present invention comprises at least one colouring agent, in particular white colouring agent, in particular selected from the group consisting of titanium dioxide, and powdered rice starch.

In further preferred embodiments, the present invention also relates to a process for the preparation of a coated edible product comprising a core and a coating, wherein the coating contains gum arabic, in particular at most 3,5 wt.-% (based on dry weight of the coating) gum arabic, and comprises at least one pregelatinized starch selected from the group consisting of rice starch, potato starch, tapioca starch and combinations thereof, in particular a product according to the present invention, comprising the following process steps:
a) providing a core for an edible product and a coating medium, which coating medium contains gum arabic, the at least one pregelatinized starch selected from the group consisting of rice starch, potato starch, tapioca starch and combinations thereof, and an aqueous medium,
b) coating the core with the coating medium and
c) obtaining the coated edible product.

In a preferred embodiment, the process according to the present invention for the preparation of a coated edible product comprising a core and a coating, wherein the coating contains gum arabic, in particular at most 3,5 wt.-% (based on dry weight of the coating) gum arabic, and comprises at least one sweetener and the at least one pregelatinized starch selected from the group consisting of rice starch, potato starch, tapioca starch and combinations thereof, in particular a product according to the present invention, comprising the following process steps:
a) providing a core for an edible product and a coating medium, which coating medium contains gum arabic and comprises at least one sweetener, at least one pregelatinized starch selected from the group consisting of rice starch, potato starch, tapioca starch and combinations thereof, and an aqueous medium,
b) coating the core with the coating medium and
c) obtaining the coated edible product.

In a preferred embodiment, the process according to the present invention for the preparation of a coated edible product comprising a core and a coating, wherein the coating is free of gum arabic and comprises at least one sweetener and at least one pregelatinized starch selected from the group consisting of rice starch, potato starch, tapioca starch and combinations thereof, in particular a product according to the present invention, comprising the following process steps:
a) providing a core for an edible product and a coating medium, which coating medium is free of gum arabic and comprises at least one sweetener, at least one pregelatinized starch selected from the group consisting of rice starch, potato starch, tapioca starch and combinations thereof, and an aqueous medium,
b) coating the core with the coating medium being free of gum arabic and
c) obtaining the coated edible product, wherein in a preferred embodiment, during said process steps a), b) c) no gum arabic is added into the coating medium.

In a preferred embodiment, in a step a1) prior to step a) the coating medium is prepared.

In a preferred embodiment, in a step a1) prior to step a) the coating medium is prepared by mixing at least one pregelatinized starch selected from the group consisting of rice starch, potato starch, tapioca starch and combinations thereof, at least a sweetener, water and optionally a high-intensity sweetener and optionally an additive to obtain the coating medium. This embodiment allows, in particular in comparison to gum arabic based recipes, a favourable particularly fast preparation of the coating medium, due to the higher solubility of the pregelatinized starch of the present invention than that of gum arabic.

In a preferred embodiment, in a step a1) prior to step a) the coating medium is prepared by mixing at most 4 wt.-% (based on weight of the coating medium) gum arabic, at least one pregelatinized starch selected from the group consisting of rice starch, potato starch, tapioca starch and combinations thereof, at least one sweetener, water and optionally a high-intensity sweetener to obtain the coating medium.

In a preferred embodiment, in a step a1) prior to step a) the coating medium is prepared by mixing at most 4 wt.-% (based on weight of the coating medium) gum arabic, at least one pregelatinized starch selected from the group consisting of rice starch, potato starch, tapioca starch and combinations thereof, at least one sweetener, at least one additive, water and optionally a high-intensity sweetener to obtain the coating medium.

In a preferred embodiment, step a1) is conducted in a mixer, in particular, the coating medium is prepared in a mixer, in particular in a low shearing mixer, in particular not in a high shearing mixer.

In a preferred embodiment, the at least one pregelatinized starch selected from the group consisting of rice starch, potato starch, tapioca starch and combinations thereof is prior to step a1) completely dissolved in cold water and the dissolved pregelatinized starch is added in step a1) to the other ingredients, preferably the at least one sweetener, preferably as last ingredient, to obtain the coating medium.

In a preferred embodiment, in step a) of the process according to the present invention a coating medium, in particular solely one single coating medium, is provided with which the core is coated in step b) of the process according to the present invention to obtain the coated edible product in step c) of the present invention.

In a preferred embodiment, the coating in step b) comprises at least one cycle, preferably 30 to 80 cycles, each cycle comprising applying the coating medium to the core in a step b1), in particular including its distribution over the core, to obtain a coating layer and subsequently drying the coating layer in a step b2).

In a preferred embodiment, the coating temperature of step b1) is 15 to 80 °C, preferably 20 to 80 °C, preferably 30 to 70 °C, preferably 40 to 65 °C, preferably 50 to 65 °C, preferably 40 to 60 °C, preferably 50 to 60 °C, preferably 55 °C, preferably 60 °C, preferably 65 °C.

In a preferred embodiment, according to which the sweetener is isomalt, the coating temperature of step b1) is 15 to 80 °C, preferably 20 to 80 °C, preferably 30 to 70 °C, preferably 40 to 65 °C, preferably 50 to 65 °C, preferably 40 to 60 °C, preferably 50 to 60 °C, preferably 55 °C.

In a preferred embodiment, according to which the sweetener is xylitol, the coating temperature of step b1) is 15 to 80 °C, preferably 20 to 80 °C, preferably 30 to 70 °C, preferably 40 to 65 °C, preferably 50 to 65 °C, preferably 65°C.

In a preferred embodiment, the drying in step b2) is an air drying.

In a preferred embodiment, the drying in step b2) is an air drying at relative humidity of 15 to 50 %, preferably 20 to 50 %, preferably 25 to 45 %, preferably 30 to 40 %, preferably 35 % (each % as relative humidity at 25 °C).

In a preferred embodiment, the drying in step b2) is an air drying at a temperature of 20 to 30 °C, preferably 22 to 28 °C, preferably 24 to 26 °C, preferably 25 °C and a relative humidity of 15 to 50 %, preferably 20 to 50 %, preferably 25 to 45 %, preferably 30 to 40 %, preferably 35 %,(each % as relative humidity at the given temperature).

In a preferred embodiment, the coating in step b) comprises at least one cycle, preferably 30 to 80 cycles, each cycle comprising applying the coating medium to the core in a step b1), in particular including its distribution over the core, to obtain a coating layer, subsequently applying a dry charge to the coating layer in a step b3) and subsequently drying the coating layer comprising the dry charge in a step b2).

In a preferred embodiment, the dry charge is a powdered additive, in particular at least one powdered sweetener and/or powdered starch, in particular rice starch.

In a preferred embodiment, the obtained coated edible product according to step c) comprises, in particular consists of, 10 to 50 wt.-%, in particular 15 to 40 wt.-%, in particular 20 to 30 wt.-%, in particular 30 wt.-% coating and 50 to 90 wt.-%, in particular 60 to 85 wt.-%, in particular 70 to 80 wt.-%, in particular 70 wt.-% core (each based on total weight of coated edible product).

In the context of the present invention, a "confectionery core" is understood to mean a solid and/or liquid composition which has a sweet taste and preferably comprises at least one sweetener.

In the context of the present invention, a "confectionery product" is understood to mean a product wherein the core is a sweet core. Preferably, a coated confectionary product according to the present invention is understood to mean a product wherein the core and the coating comprise each at least one sweetener and both have a sweet taste.

In the context of the present invention, a "savoury core" is understood to mean a solid and/or liquid composition which has no sweet but a spicy or salty taste and, thus, preferably which does not comprise a sweetener.

In the context of the present invention, a "coated savoury product" according to the present invention is understood to mean a product wherein the core is a savoury core. Preferably, a coated savoury product according to the present invention is understood to mean a product wherein the core does not comprise a sweetener and has no sweet taste, but the coating of the savoury product according to the present invention has a sweet taste and, thus, preferably includes a sweetener.

In the context of the present invention, a "coated edible product" is understood to mean an edible product having an edible core and an edible coating. Preferably, the coating of an edible product contains of at least one coating layer, preferably more than one layer, preferably 10 to 100, in particular 30 to 90, in particular 40 to 80 coating layers, which coating layer has been prepared by coating the core with at least one coating medium.

In the context of the present invention, a "comparative coated edible product" is understood to mean an edible product having an edible core and an edible coating, wherein the coating a) contains no pregelatinized starch but contains gum arabic or b) contains pregelatinized starch from pea or maize, in particular maize, in particular waxy maize starch, and contains gum arabic or c) contains pregelatinized starch from pea or maize, in particular maize, in particular waxy maize starch, and contains no gum arabic in particular contains no pregelatinized starch or contains pregelatinized starch from pea or maize, in particular maize starch, in particular waxy maize starch but contains gum arabic.

In the context of the present invention, "similar properties" is understood to mean that a coated edible product according to the present invention has similar properties as a comparative coated edible product.

In the context of the present invention, "similar properties" are a similar organoleptic property, a similar texture, a similar elasticity, a similar viscosity and/or a similar taste, in particular any of these being similar to a product as obtained according to the teaching of the comparative example 3.1 and 3.2, comparative trials 5 and 8 of example 5 and/or comparative maize-trial or pea-trial of example 6.

In the context of the present invention, a "coating layer" is understood to mean a layer which envelops a core or a coated core at least partially and which has been obtained by coating the core or the coated core with a coating medium.

In the context of the present invention a "core" is understood to mean a centre of an edible product, which can be a food, in particular a confectionary or savoury food, a pharmaceutical or a nutraceutical and which is capable to be coated, for example a chewing gum, a soft candy, a chocolate product, a nut, or an edible seed, preferably an almond.

In the context of the present invention, a "coating" is understood to mean at least one coating layer, preferably more than one coating layer, preferably 10 to 100, in particular 30 to 90, in particular 40 to 80, coating layers.

In the context of the present invention, a "coating medium" is preferably a coating solution or a coating suspension.

In the context of the present invention, an "aqueous medium" is preferably an aqueous solution, in particular water, in particular demineralised water.

In the context of the present invention, the process step of "coating" is understood to mean applying at least once a coating medium to an edible core and drying the applied coating medium, whereby in a preferred embodiment additionally a dry charge is applied to the edible core comprising the at least one coating medium. In a preferred embodiment, the applying of the coating medium to an edible core includes a step of distribution of the coating medium over the edible cores. Each single applying of the coating medium and optional drying and/or dry charging is also termed to be a coating cycle or simply cycle.

In the context of the present invention, a "cycle" is understood to mean a process step in which a coating medium is partially or completely applied to an edible core, in particular including its distribution over the core, optionally followed by a drying step and/or dry charging step, preferably being a repetitive process step.

In the context of the present invention, a "cycle" is understood to mean performing method step b), in particular (b1) and b2)) or (b1) and b3)) or (b1) b2) and b3)), in this order.

In the context of the present invention "working temperature" is understood to mean the temperature at which the coating step is conducted.

In the context of the present invention, a "phase" of coating cycles is understood to refer to at least one, preferably more than one cycles of coating, wherein the cycles of one phase are different to cycles of another phase by at least one process parameter or/and at least one coating component and/or separated by an intervening process step from cycles of another phase.

In the context of the present invention, "gum arabic" is also known as for example gum sudani, acacia gum, Arabic gum, gum acacia, acacia, Senegal gum, Indian gum. In the context of the present invention, "gum arabic" is a complex mixture of glycoproteins and polysaccharides predominantly comprising arabinose and galactose. Preferably, gum arabic is a natural gum comprising the hardened sap of two species of the acacia (sensu lato) tree, Senegalia senegal and Vachellia seyal. Preferably, in the context of the present invention, the term "gum arabic" does not indicate a particular botanical source. Preferably, in the context of the present invention, "gum arabic" may not have been collected from acacia species, but may originate for example from Combretum, Albizia, or some other genus.

In the context of the present invention, "starch" is understood to mean a polymeric carbohydrate, in particular polymeric saccharide, consisting of amylose and amylopectin, in particular of glucose units, in particular α-D-glucose units, joined by glycosidic bonds.

In the context of the present invention, "pregelatinized starch" is understood to mean a starch, for instance a native or modified starch, that has been subjected to a pregelatinization process, in particular has been cooked, dried, preferably in a drum dryer or in an extruder, and which is optionally ground into grains or powder. Preferably, pregelatinized starch is cold water-soluble, in particular can be quickly and easily be dissolved in cold liquids and further allows products to develop full viscosity without cooking. Preferably, pregelatinized starch is obtained after a pregelatinization process, wherein the pregelatinization process provides the ability to form a cold gel, in particular coldwater paste, thus a pregelatinized starch, for native and/or modified starches. Preferably, these pregelatinized starches provide products showing already a viscosity without the need of cooking or necessary high temperatures, which means that the food manufacturer does not need to precook the starch. Preferably, a pregelatinized starch retains most of the functional properties and viscosity of the corresponding starch.

In the context of the present invention, "starch gelatinization process and starch pregelatinization process" is understood to mean a process of breaking down the intermolecular bonds, in particular hydrogen bonds, of starch molecules in the presence of water and heat, allowing the hydrogen bonding sites to engage more water. Preferably, this process irreversibly at least partially dissolves the starch in water. Preferably, water acts as a plasticizer. Preferably, the gelatinization or pregelatinization temperature of starch depends upon the plant type and the amount of water present, pH, types and concentration of salt, sugar, fat and protein in the recipe, as well as if a starch derivatisation technology was used. Preferably, some types of unmodified native starches start gelatinizing at 55 °C, other types at 85 °C. Preferably, the gelatinization temperature of modified starch depends on, for example, the degree of crosslinking, acid treatment, or acetylation.

In the context of the present invention, a "modified starch" can be physically and/or chemically modified.

In the context of the present invention, a "physically modified starch" is understood to mean a starch, in particular a native starch, which has been subjected to at least one physical, in particular non-chemical, treatment step. This at least one physical, in particular non-chemical, treatment step can be, for example, sonication, milling, static ultrahigh (high hydrostatic) pressure treatments, use of high-pressure homogenizers, pulsed electric field, freezing and thawing, and freeze-drying. This at least one physical, in particular non-chemical, treatment step can also be a heat treatment step, which produces a thermally inhibited starch.

Preferably, physical modifications of starches are starch property modifications imparted by physical treatments that do not result in any chemical modification of the starch other than limited glycosidic bond cleavages. A physically modified starch preferably exhibits improved functionality, in contrast to a starch in native form.

In the context of the present invention, a "chemically modified starch" is understood to mean a starch, in particular a native starch, which has been subjected to at least one chemical treatment step. A chemically modified starch may be an acid-treated, alkali-modified, bleached, oxidised, enzymatically modified, acetylated or also hydroxypropyl-derivatised starch.

In the context of the present invention, a "native starch" is understood to mean a starch in native, that means original, form, that means in the form as obtained from the plant of origin, in particular its cell walls.

In the context of the present invention, a "thermally inhibited starch" is understood to mean a starch which has been subjected to at least one thermal treatment, which is a non-chemical physical treatment step. Preferably, the at least one thermal treatment step can be, for example, heat-moisture treatment, annealing, microwave and other heating of dry starch, and osmotic pressure treatment. Preferably, the at least thermal treatment step can be a heating step, for example in a defined pH range, which thermal treatment step optionally does not result in any chemical modification of the starch other than limited glycosidic bond cleavages. A thermally inhibited starch preferably exhibits improved functionality, in contrast to a starch in native form.

In the context of the present invention, a "sweetener" is understood to mean a substance used to sweeten a food or drink, in particular an edible product. Preferably, a sweetener is at least one sugar alcohol, in particular isomalt, xylitol, maltitol, erythritol, lactitol, mannitol, sorbitol or a combination thereof and/or a sugar, in particular sucrose, glucose or isomaltulose.

In the context of the present invention, a "waxy starch" is understood to mean a starch composed almost entirely of amylopectin molecules, in particular consists thereof. Preferably, a waxy starch does not contain amylose molecules.

In the context of the present invention, a "non-waxy starch" is understood to mean a starch composed almost entirely of amylopectin and amylose molecules, in particular consists thereof.

In the context of the present invention, "rice starch" is understood to mean a starch-containing composition made from rice which can be obtained particularly from rice grains and which is characterized particularly by essentially comprising carbohydrates obtained from rice grains, particularly consists thereof. For example, the rice starch can be obtained from rice grains from *Oryza sativa ssp. japonica, O. sativa ssp. sinica*, *O. sativa ssp. indica, O. sativa ssp. aromatic* or O. *sativa ssp.,* in particular from O. *sativa ssp. indica.*

In the context of the present invention, a "sugar" is understood to mean a mono- or disaccharide, in particular glucose, isomaltulose and sucrose.

In the context of the present invention, an "additive" is understood to mean an additional edible substance, in particular selected from the group consisting of a flavouring, a starch, a high-intensity sweetener, an emulsifier, a colouring agent and a taste modifier.

In the context of the present invention, the term "isomalt" refers to a mixture of 6-O-α-D-glucopyranosyl-D-sorbitol (1,6-GPS) and 1-O-α-D-glucopyranosyl-D-mannitol (1,1-GPM) and optionally 1-O-α-D-glucopyranosyl-D-sorbitol (1,1-GPS), particularly Isomalt GS or Isomalt ST.

In the context of the present invention, the term "isomalt" or "hydrogenated isomaltulose" is preferably understood to mean a mixture consisting of or comprising 1,1-GPM and 1,6-GPS, in particular a mixture consisting of or comprising 20 to 80, in particular 35 to 61% by weight of 1,1-GPM and 80 to 20, in particular 65 to 39% by weight of 1,6-GPS, in particular an equimolar or nearly equimolar mixture consisting of or comprising 1,1-GPM and 1,6-GPS. Accordingly, isomalt can also be understood to mean mixtures consisting of or comprising 1,1-GPM and 1,6-GPS which do not have an equimolar ratio of 1,1-GPM to 1,6-GPS, but in which there is a higher 1,1-GPM- than 1,6-GPS-content or a higher 1,6-GPS- than 1,1-GPM-content.

In a particularly preferred embodiment, isomalt comprises no components other than the two components 1,1-GPM and 1,6-GPS.

In the context of the present invention, "Isomalt GS" is understood to mean a mixture of 72 to 78% by weight, preferably 75% by weight, 1,6-GPS and 22 to 28% by weight, particularly 25% by weight, 1,1-GPM (in each case based on the total weight of the dry substance of the Isomalt GS).

In the context of the present invention, "Isomalt ST" is understood to mean a mixture of 53 to 47% by weight 1,6-GPS and 47 to 53% by weight 1,1-GPM (based on the dry weight of the Isomalt ST).

In a particularly preferred embodiment, isomalt comprises, in addition to the two components 1,1-GPM and 1,6-GPS, one or more further components, for example mannitol, sorbitol, sucrose, 1,1-GPS (1-O-α-D-glucopyranosyl-D-sorbitol), glycosylglycitols, deoxy-disaccharide alcohols, GPI (glucopyranosyl-idite), isomaltose, isomaltulose, isomelezitose, hydrogenated or non-hydrogenated oligosaccharides, in particular hydrogenated or non-hydrogenated trisaccharides, or/and other substances.

In the context of the present invention, the presence of a "white" colouring is determined optically, preferably by means of a spectrophotometer, in particular a spectrophotometer CM-5 of the company Minolta, whereby preferably the colour values L^{∗}, a^{∗} and b^{∗} in transmission and reflection (indication of the results in international CIELab (L^{∗}, a^{∗}, b^{∗}) values (Commission Internationale de l'Eclairage, Vienna) of the coated edible products are measured, in particular in accordance with DIN 5033 (1983-07 edition), DIN 6167 (1980-01 edition), DIN 6174 (1979-01 edition), DIN 55981 (1979-05 edition) and/or DIN EN 1557 (1996 edition).

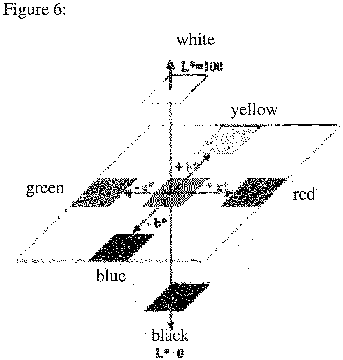

The parameters mean: L^{∗} = brightness (0 to 100), a^{∗} = red to green tone (-150 to 100) and b^{∗} = yellow to blue tone (-100 to 150) and are visualized in figure 6. In the present teaching the term L^{∗}a^{∗}b^{∗} is also termed to be Lab.

In a particularly preferred embodiment, the brightness value L^{∗} of the coated edible products according to the present invention obtained according to the process according to the present invention is particularly high, in particular higher than in comparative coated edible products, in particular without white colouring agents, in particular without TiO₂.

Where quantitative indications, in particular percentages, of components of a product or composition are given in the context of the present invention, these add up to 100% of the composition and/or product together with the other explicitly stated or expertly apparent further components of the composition or product, unless explicitly stated otherwise or expertly apparent.

In the context of the present invention, the term "a core "or "the core" is understood to refer to a single core or to a multitude of cores.

In the context of the present invention, the term "at least one" is understood to mean a quantity expressing a number of 1 or 2 or 3 or 4 or 5 or 6 or 7 or 8 or 9 or 10 and so on. In a particularly preferred embodiment, the term "at least one" may represent exactly the number 1. In another preferred embodiment, the term "at least one" may also mean 2 or 3 or 4 or 5 or 6 or 7.

In the context of the present invention, the term "at most" is understood to mean a quantity expressing a number up to the at most number, at most 10 means a quantity expressing a number of 1 or 2 or 3 or 4 or 5 or 6 or 7 or 8 or 9 or 10 but not higher. In a particularly preferred embodiment, the term "at most" may represent exactly the at most number, for example at most 10 may represent exactly 10.

Where in the context of the present invention a "comprising", a "containing", a "having" or a "content" of a component is expressly mentioned or implied, this means that the respective component is present, in particular present in a measurable amount.

If in connection with the present invention a "presence", a "containing" or a "content" of a component is expressed, mentioned or implied in an amount of 0 [unit], in particular mg/kg, µg/kg or wt.%, this means that the respective components are not present in a measurable amount, in particular are not present.

The number of decimal places indicated corresponds to the precision of the measurement method used in each case.

If, in the context of the present invention, the first and second decimal places or the second decimal place are/is not indicated for a number, the latter is/are to be set as zero.

In the context of the present invention, the terms "comprising" and "containing" are understood to mean that in addition to the elements explicitly covered by these terms, other elements not explicitly mentioned may be added. In the context of the present invention, it is also understood by these terms that only the explicitly mentioned elements are covered and that no further elements are present. In this particular embodiment, the meaning of the terms "comprising" and "containing" is synonymous with the term "consisting of". Furthermore, the terms "comprising" and "containing" also cover compositions which, in addition to the explicitly mentioned elements, also contain further elements which are not mentioned but which are of a functional and qualitatively subordinate nature. In this embodiment, the terms "comprising" and "containing" are synonymous with the term "consisting essentially of".

In the context of the present invention, the term "obtaining a product, for instance coated edible product" is understood to mean that the product, for instance coated edible product produced in a preceding step by coating a core with a coating medium is made available from the respective mixture of core and coating medium, in particular is isolated from it, in particular obtaining a product is therefore to be understood preferably as isolating the desired product, in particular coated edible product. The processes used for this can be a physical process.

In the context of the present invention, the term "and/or" is understood to mean that all members of a group connected by the term "and/or" are represented both cumulatively with respect to each other in any combination, and alternatively with respect to each other. Exemplarily, for the expression "A, B and/or C", the following disclosure is to be understood thereunder: i) (A or B or C), or ii) (A and B), or iii) (A and C), or iv) (B and C), or v) (A and B and C), or vi) (A and B or C), or vii) (A or B and C), or viii) (A and C or B).

In the context of the present invention, individual components or constituents of a composition or of one of its components, determined quantitatively in relative form, in particular in percentages, preferably add up to 100% by weight of the respective composition referred to or of the composition or, if referred to, of a component thereof, unless otherwise stated.

Further preferred embodiments of the present invention are apparent from the dependent claims.

The present invention will be explained in more detail in the following examples and the accompanying figures both of which are not to be understood as limiting.

The figures show:
Figure 1 a photo of chewing gum cores before the coating (core) and subsequently to the coating step b) according to the present invention (final product) of example 1,
Figure 2 a diagram showing the number of coating cycles on the x-axis and the amount of coating medium used on the y-axis, as well as the weight of the core pre-coating and the weight of the coated edible product after the coating cycles of example 1,
Figure 3 a bar-diagram showing the results of a first dynamic viscosity measurement experiment, wherein the y-axis shows the dynamic viscosity in mPas and the x-axis shows the compositions of different aqueous solutions,
Figure 4 a bar-diagram showing the results of a second dynamic viscosity measurement experiment, wherein the y-axis shows the dynamic viscosity in mPas and the x-axis shows the compositions of different coating media,
Figure 5 a) and b) each a bar-diagram showing the results of a third dynamic viscosity measurement experiment, wherein the y-axis shows the dynamic viscosity in mPas and the x-axis shows the process temperature, and
Figure 6 schematically a Lab-diagram.

### Example 1: Process of the present invention to prepare a coated edible product according to the present invention

A coated edible product according to the present invention is prepared.

Accordingly, the coating medium is prepared using the substances according to table 1.

**Table 1: Substances and wt.-% of the substances used to prepare a coating medium according to the present invention.**

| Substance | wt.-% (in relation to total weight of substances) |
|---|---|
| Isomalt GS | 65,0 |
| water | 33,9 - 34,4 |
| high-intensity sweetener | 0,1 |
| pregelatinized waxy rice starch | 0,5 - 1,0 |

**Table 2: Core recipe**

| Substance | wt.-% (in relation to total weight of the core) |
|---|---|
| Gum base A, soft | 16,0 |
| Gum base B, hard | 16,0 |
| Sorbitol P60 | 29,3 |
| Isomalt ST PF | 25,0 |
| Lycasin 80/55 | 10,6 |
| Menthol | 1,5 |
| Peppermintoil | 1,5 |
| Sucralose | 0,1 |

Pregelatinized waxy rice starch is premixed with part of the water (1:10 up to 1:20 ratio of pregelatinized rice starch to water, each based on weight) at room temperature while vigorously stirring. Then, the coating medium is prepared by mixing isomalt GS, the high-intensity sweetener and the other part of the water to obtain a mixture, the mixture is heated up to 55 °C and finally the aqueous pregelatinized waxy rice starch solution obtained above is added to said mixture to obtain a coating medium according to the invention.

Alternatively, isomalt GS, pregelatinized starch and high-intensity sweetener are mixed in cold water to obtain a mixture, which is heated to 65 °C while stirring to obtain a coating medium.

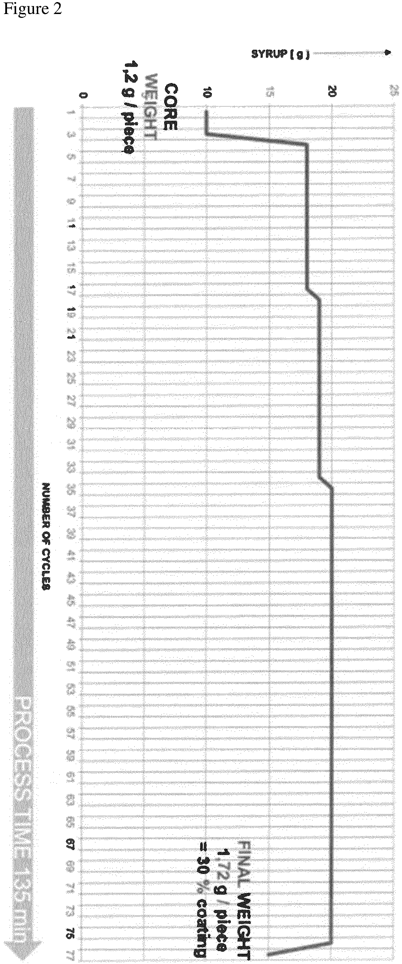

Chewing gum cores (table 2) (1,0 to 1,2 g/piece) and the coating medium as prepared above are provided according to step a) of the process of the present invention. The cores are coated in 77 cycles (4 phases, figure 2) according to step b) in an overall process time of 135 min, wherein in each single cycle the applying of the coating medium according to step b1) of the present invention including its distribution over the cores is conducted at a working temperature of 55 °C to obtain a coating layer which is subsequently dried according to step b2) of the present invention to obtain a coated edible product according to the present invention according to step c) of the present invention having a weight of 1,72 g/piece (figure 2). The coated edible product according to the present invention, thus, comprises 30 wt.-% of the coating (based on total weight of the coated edible product) (figure 2).

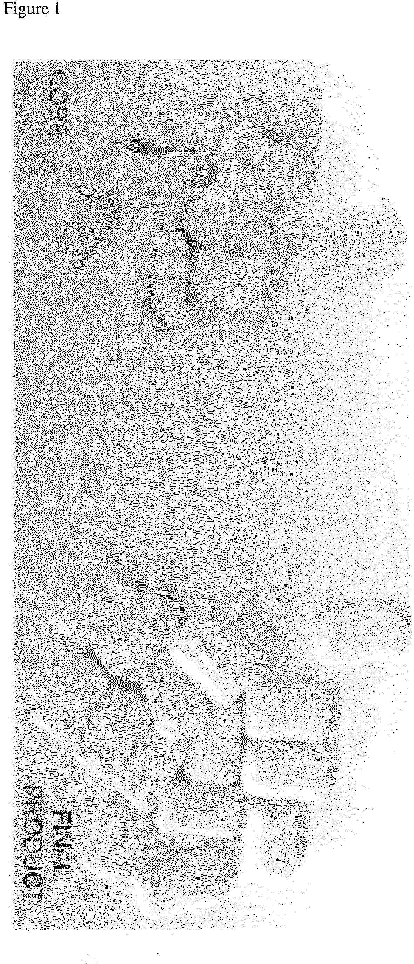

Figure 1 shows the chewing gum cores before the coating (core in figure 1) (pre-coating) and after the coating step b) according to the present invention (final product in figure 1). It can be seen, that the coated edible product according to the present invention displays a favourable white colouration.

The coatings of the chewing gums obtained according to this example showed in comparison to the coatings of the chewing gums obtained according to comparative example 3 a very clear white colour and no yellowish appearance. The products are clean label products. In addition, favourably the amount of the matrix material in the coating medium, namely pregelatinized rice starch, can be lower than the amount of gum arabic being conventionally used in coating media.

### Example 2: Coating trials with coating media including xylitol as sweetener and different pregelatinized starches comprising powdered rice starch as additive according to the present invention

Coated edible products according to the present invention are prepared comprising powdered rice starch, in particular as additive, in particular as white colouring agent, to replace titanium dioxide. The substances used to prepare a coated edible product according to the present invention are listed in table 3.

**Table 3: Coating medium compositions with different pregelatinized starches for coated edible products according to the present invention.**

| Substance | Trial 1 | Trial 2 | Trial 3 | Trial 4 |
|---|---|---|---|---|
| | [wt.-%] | [wt.-%] | [wt.-%] | [wt.-%] |
| xylitol | 62,0 | 60,0 | 62,0 | 62,0 |
| water | 37,3 | 37,3 | 37,5 | 37,5 |
| pregelatinized non-waxy rice starch | 0,7 | 0,7 | / | / |
| powdered rice starch | / | 2,0 | / | / |
| pregelatinized non-waxy potato starch | / | / | 0,5 | / |
| pregelatinized non-waxy tapioca starch | / | / | / | 0,5 |

| | | | | |
|---|---|---|---|---|
| (wt.-% in relation to total weight of substances) | | | | |

The coating medium provided in step a) of the process according to the present invention is prepared either by
A) premixing pregelatinized starch with part of the water (1:10 up to 1:20 ratio of pregelatinized starch to water, each based on weight) at room temperature while vigorously stirring. Then, the coating medium is prepared by mixing xylitol and the other part of the water to obtain a mixture, the mixture is heated up to 65 °C and finally the aqueous pregelatinized waxy starch solution obtained above is added to said mixture to obtain a coating medium according to the invention or
B) mixing xylitol, water, pregelatinized starch and optionally powdered rice starch listed in table 2, wherein the water is cold water to obtain a mixture and heat the mixture to 65 °C while stirring to obtain a coating medium.

Conventional cores are coated in 74 cycles (10 phases) according to step b), wherein in each single cycle the applying of the coating medium according to step b1) of the present invention including its distribution over the cores is conducted at a working temperature of 65 °C to obtain a coating layer which is subsequently dried according to step b2) of the present invention to obtain a coated edible product according to the present invention according to step c) of the present invention having a weight of 1,72 g/piece. The coated edible products according to the present invention comprise 30 to 32,2 wt.-% coating (based on total weight of the coated edible product) (table 4).

The process parameters are the following:
- Batch coater
- Air drying = 25 °C / 15 - 20 rH
- Coating temperature = 65 °C
- Rotation speed of the batch coater = 16 - 18 rpm

**Table 4: Process parameters of the coating step and the resulting coating amount**

| Parameters | Trial 1 | Trial 2 | Trial 3 | Trial 4 |
|---|---|---|---|---|
| process time | 203 min | 194 min | 189 min | 208 min |
| phases / cycles | 10 / 74 | 10 / 74 | 10 / 74 | 10/74 |
| amount of coating [wt.-% based on | 31,0% | 30,0 % | 32,2 % | 30.7 % |
| total weight of coated product] | | | | |

All pregelatinized starches used herein are listed in table 3 and can be used as gum arabic substitutes. The pregelatinized waxy starches used for preparing a coating medium favourably result in a slightly higher viscosity in the coating medium at a lower dosage, which allows to use less matrix material for the coatings than if gum arabic would have been used.

All pregelatinized starches used are superior to gum arabic in terms of the "whiteness" for coated edible products, as it has its own high colour, in particular whiteness, intensity.

The coatings of the chewing gums obtained according to this example showed in comparison to the coatings of the chewing gums obtained according to comparative example 3 a very clear white colour and no yellowish appearance. The products are clean label products. In addition, favourably the amount of the matrix material in the coating medium, namely pregelatinized rice starch, can be lower than the amount of gum arabic being conventionally used in coating media.

### Example 3: Comparative xylitol-based coating compositions used for coated edible products

### Example 3.1: Comparative coating composition used for coated edible products without sealing layer

In order to produce comparative coated edible products a coating solution comprising gum arabic is used. A coating solution (table 5) comprising 2 wt.-% gum arabic (in relation to the total weight of the coating solution) is used to build up coating layers resulting in a comparative coated edible product. Accordingly, xylitol and gum arabic are mixed in the given quantities in cold water to obtain a mixture, which is heated to 65 °C while stirring to obtain the coating media. The same cores as in Example 2 have been used.

**Table 5: Substances and wt.-% of the substances used to prepare a coating solution for coating a comparative edible product.**

| Substance | wt.-% (in relation to total weight of substances) |
|---|---|
| xylitol | 72,0 |
| water | 24,0 |
| gum arabic (50 wt.-% in solution) | 4,0 |

The coated chewing gums are obtained in analogy to the process as shown in Example 1.

The coatings of the chewing gums obtained showed in comparison to the coatings of the chewing gums obtained according to example 1 a clearly visible yellow shade.

Example 3.2: Comparative coating compositions used for coated edible products with sealing layer causing a shiny surface

In order to produce comparative coated edible products with shiny surfaces two different coating solutions comprising gum arabic are used. The first coating solution corresponds to the coating solution used in example 3.1 (table 5) comprising 2 wt.-% gum arabic (in relation to the total weight of the coating solution) and is used to build up coating layers. A second coating solution (table 6), also called sealing solution, comprising 7 wt.-% gum arabic (in relation to the total weight of the coating solution), is used to wax the surface of the coating layers built up by the first coating solution, which results in a shiny surface of the comparative coated edible product. Accordingly, xylitol and gum arabic are mixed in the given quantities in cold water to obtain a mixture, which is heated to 65 °C while stirring to obtain the coating media. The same cores as in Example 2 have been used.

**Table 6: Substances and wt.-% of the substances used to prepare a second coating solution (sealing solution) for coating a comparative edible product with a shiny surface.**

| Substance | wt.-% (in relation to total weight of substances) |
|---|---|
| xylitol | 65,0 |
| water | 21,0 |
| gum arabic (50 wt.-% in solution) | 14,0 |

The coated chewing gums with shiny surfaces are obtained in analogy to the process as shown in Example 1 except for applying in a final coating step the second coating solution for sealing/waxing.

The coatings of the chewing gums with shiny surfaces obtained showed in comparison to the coatings of the chewing gums obtained according to example 1 a clearly visible yellow shade.

### Example 4: Viscosity measurement of different coating media comprising pregelatinized rice starch versus gum arabic

Test series 1: dynamic viscosity measurements of coating media with different concentrations of pregelatinized waxy rice starch in comparison to coating media with gum arabic

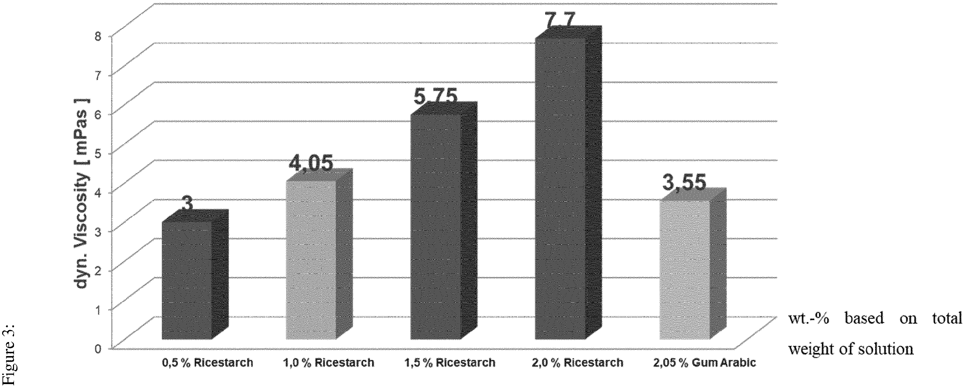

For this dynamic viscosity measurement experiment, aqueous solutions with different pregelatinized waxy rice starch amounts were prepared, the dynamic viscosity was measured and compared to the dynamic viscosity of a gum arabic standard aqueous solution (including gum arabic solution consisting of 50 wt.-% gum arabic in water). The results are shown in Figure 3.

Figure 3 shows a bar-diagram, wherein the y-axis shows the dynamic viscosity in mPas and the x-axis shows different aqueous solutions. The aqueous solution relating to the first bar from left to right includes 0,5 wt.-% pregelatinized waxy rice starch, the aqueous solution relating to the second bar includes 1,0 wt.-% pregelatinized waxy rice starch, the aqueous solution relating to the third bar includes 1,5 wt.-% pregelatinized waxy rice starch, the aqueous solution relating to the fourth bar includes 2,0 wt.-% pregelatinized waxy rice starch and the aqueous solution relating to the fifth bar includes 2,05 gum arabic (each based on total weight of aqueous solution). It can be seen that the higher the concentration of pregelatinized waxy rice starch in the aqueous solution is, the higher the dynamic viscosity is as well. A solution including 2,05 wt.-% gum arabic (based on the total weight of the solution) has a dynamic viscosity of 3,55 mPas. Solutions including 0,5 and 1,0 wt.-% pregelatinized waxy rice starch (based on the total weight of the solution) have a dynamic viscosity of 3 and 4,05 mPas and thus are comparable to the solution including 2,05 wt.-% gum arabic (based on the total weight of the solution). Higher amounts of pregelatinized waxy rice starch of 1,5 and 2,0 wt.-% (based on the total weight of the solution) result in even higher dynamic viscosities of 5,75 and 7,7 mPas.

Test series 2: dynamic viscosity measurements of coating media with different concentrations of pregelatinized waxy rice starch and with Isomalt GS, Isomalt ST (each isomalt syrup (65 wt.-% DS (dry substance) isomalt)) or isomaltulose (isomaltulose syrup (60 wt.-% isomaltulose)) as sweetener as well as with and without additives in comparison to a coating medium with gum arabic and with Isomalt GS, Isomalt ST (each isomalt syrup (65 wt.-% DS (dry substance) isomalt)) or isomaltulose (isomaltulose syrup (60 wt.-% isomaltulose)) as sweetener.

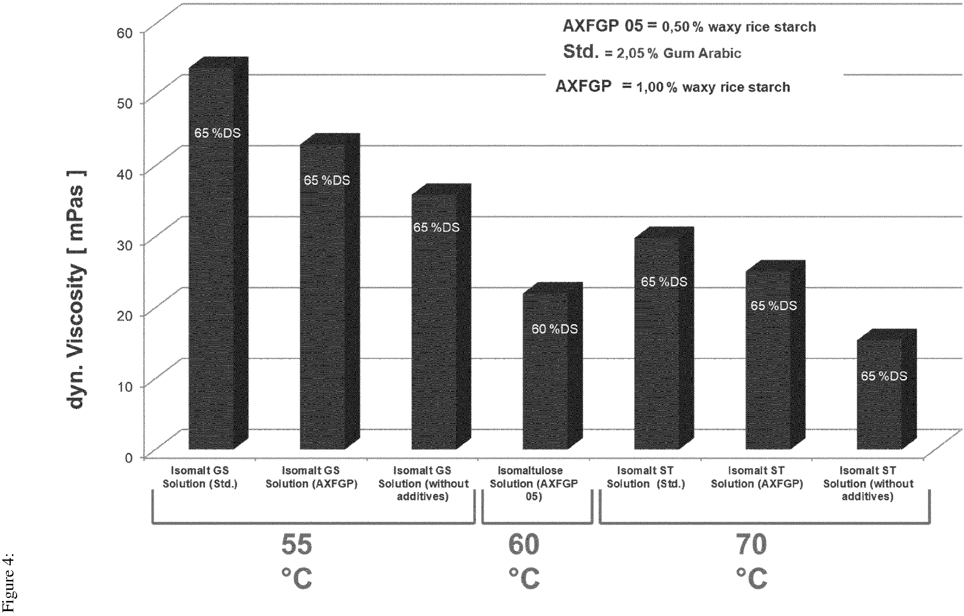

The results of the dynamic viscosity measurement experiment of test series 2 are shown in figure 4. Figure 4 shows a bar-diagram with a total of 7 bars, wherein the y-axis shows the dynamic viscosity in mPas and the x-axis shows different coating media and the process temperatures. The first three bars from left to right relate to coating media including Isomalt GS as sweetener and a process temperature of 55 °C. The coating medium relating to the first bar further includes 2,05 wt.-% gum arabic (termed Std.), the coating medium relating to the second bar further includes 1,00 wt.-% pregelatinized waxy rice starch (termed AXFGP) (each based on total weight of coating medium) and the coating medium relating to the third bar includes no additional substance (termed without additives). The fourth bar from left to right relates to a coating medium including isomaltulose as sweetener and 0,50 wt.-% pregelatinized waxy rice starch (termed AXFGP 05) and a process temperature of 60 °C. The fifth to seventh bars from left to right relate to coating media including Isomalt ST as sweetener and a process temperature of 70 °C. The coating medium relating to the fifth bar further includes 2,05 wt.-% gum arabic (termed Std.), the coating medium relating to the sixth bar further includes 1,00 wt.-% pregelatinized waxy rice starch (termed AXFGP) (each based on total weight of coating medium) and the coating medium relating to the seventh bar includes no additional substance (termed without additives). The highest dynamic viscosity is observed with the coating media including gum arabic (twice the amount gum arabic compared to pregelatinized waxy rice starch but only 1.25x higher dynamic viscosity) and a sweetener, followed by those including pregelatinized waxy rice starch and the sweetener while the lowest dynamic viscosity is observed with the coating media comprising only the sweetener without either pregelatinized waxy rice starch or gum arabic.

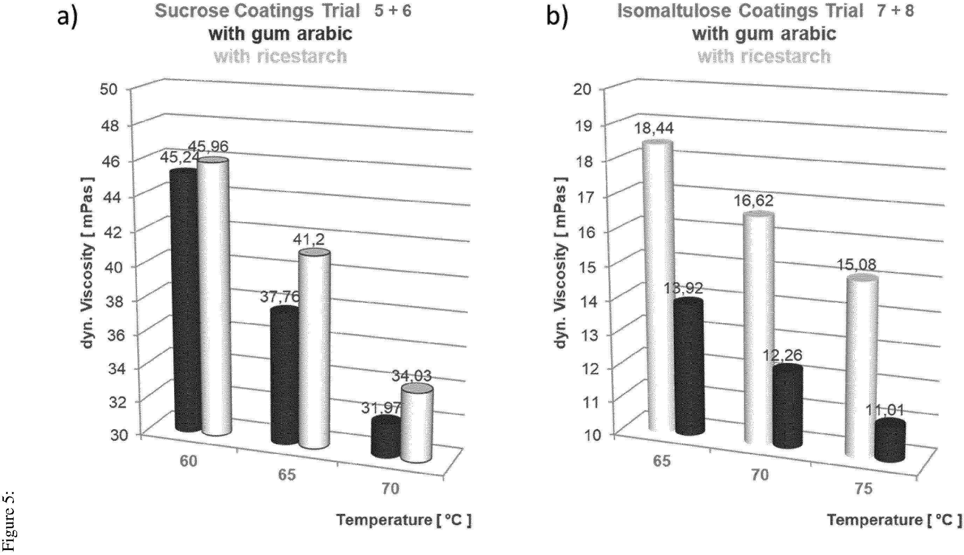

Test series 3: For a third dynamic viscosity measurement experiment coating media including substances according to table 7 were prepared and the dynamic viscosity was measured. The results are shown in Figure 5.

Figure 5 show two bar-diagrams (5a and 5b) for trials 5 to 8, wherein each y-axis shows the dynamic viscosity in mPas and each x-axis shows the process temperature. Figure 5 a) shows a bar-diagram for trials 5 and 6 wherein the black bars relate to coating media including sucrose as sweetener and gum arabic and the white bars relate to coating media including sucrose as sweetener and pregelatinized waxy rice starch. The dynamic viscosity of the coating media was compared at different process temperatures. It can be seen that the dynamic viscosity of the coating media with pregelatinized waxy rice starch shown as white bars is comparable (for example at 60 °C 45,25 mPas for coating medium including gum arabic compared to 45,96 mPas for coating medium including pregelatinized waxy rice starch) or higher, thus, better (because less pregelatinized waxy rice starch is required to obtain the same viscosity) (for example at 65 °C 37,76 mPas for coating medium including gum arabic compared to 41,20 mPas for coating medium including pregelatinized waxy rice starch) than the dynamic viscosity of the coating medium with gum arabic shown as black bars at each process temperature (60 °C, 65 °C and 70 °C).

Figure 5 b) shows a bar-diagram for trials 7 and 8, wherein the black bars relate to coating media including isomaltulose as sweetener and gum arabic and the white bars relate to coating media including isomaltulose as sweetener and pregelatinized waxy rice starch. The dynamic viscosity of the coating media was compared at different process temperatures. It can be seen that the dynamic viscosity of the coating media with pregelatinized waxy rice starch shown as white bars is higher, thus, better (for example at 70 °C 12,26 mPas for coating medium including gum arabic compared to 16,62 mPas for coating medium including pregelatinized waxy rice starch) than the dynamic viscosity of the coating medium with gum arabic shown as black bars at each process temperature (65 °C, 70 °C and 75 °C).

It can further be seen in figure 5, that the higher the temperature, the lower the dynamic viscosity of the coating media is. The dynamic viscosity of the coating media including sucrose as sweetener (figure 5a) is higher at comparable temperatures (65 °C and 70 °C) than the dynamic viscosity of the coating media including isomaltulose as sweetener (for example at 70 °C 34,03 mPas for coating medium including pregelatinized waxy rice starch and sucrose compared to 16,62 mPas for coating medium including pregelatinized waxy rice starch and isomaltulose).

**Table 7: Comparison of coating media including gum arabic or pregelatinized waxy rice starch and (sucrose or isomaltulose)**

| Substance | Trial 5 | Trial 6 | Trial 7 | Trial 8 |
|---|---|---|---|---|
| | [wt.-%] | [wt.-%] | [wt.-%] | [wt.-%] |
| sucrose | 65,0 | 65,0 | / | / |
| water | 29,9 | 33,0 | 37,9 | 34,8 |
| pregelatinized non-waxy rice starch | / | 1,0 | 1,0 | / |
| gum arabic solution (50 wt.-%) | 4,1 | / | / | 4,1 |
| titanium dioxide | 1,0 | 1,0 | 1,0 | 1,0 |
| isomaltulose | / | / | 60,0 | 60,0 |
| Stevia | / | / | 0,1 | 0,1 |

| | | | | |
|---|---|---|---|---|
| (wt.-% in relation to total weight of substances) | | | | |

### Example 5: Coating two different cores with the coating media prepared for the third dynamic viscosity measurement experiment

**Table 8: Core recipes**

| Core recipe for coating medium trials 5 and 6 in [wt.-%] | | Core recipe for coating medium trials 7 and 8 in [wt.-%] | |
|---|---|---|---|
| gum base | 34,00 | gum base | 34,00 |
| sucrose | 52,35 | isomaltulose | 61,35 |
| glucose syrup DE 40 | 10,00 | menthol | 1,50 |
| menthol | 1,50 | peppermint oil | 1,50 |
| peppermint oil | 1,50 | Symlife Sweet flavor | 1,00 |
| glycerol | 0,65 | glycerol | 0,65 |

| | | | |
|---|---|---|---|
| (wt.-% in relation to total weight of substances) | | | |

The coating was conducted in analogy to the coating process of example 2 with the coating media given in table 7 with cores containing the substances listed in table 8, wherein coated chewing gum dragees were obtained according to step c) of the process of the present invention.

### Results:

- pregelatinized waxy rice starch provides slightly more viscosity to the coating medium (both with sucrose and isomaltulose)
- the distribution of the coating medium during the coating is comparable with gum arabic and rice starch
- from a process-technological view there is no significant difference between the processes of the present invention (trials no. 6 and 7) and the gum arabic based trials (trials no. 5 and 8), except that if the coating medium is prepared according to variant B) of example 2 without gum arabic the preparation is faster than the gum-based preparation method.
- The shelf-life tests of the sucrose and isomaltulose containing chewing gum dragees show comparable results between the pregelatinized waxy rice starch (coated edible product according to the present invention) and gum arabic (comparative coated edible product) containing coating media

Example 6: Comparison of Lab-values of coated edible products according to the invention and comparative coated edible products comprising pregelatinized starch from maize and pea

The compositions of the coatings of three coated edible products according to the invention (Tapioca-trial, Waxy-rice-trial 1 and Waxy-rice-trial 2) and two comparative coated edible products (Maize-trial and Pea-trial) are listed in table 9. The coated edible products were prepared according to the process of example 1 using conventional chewing gum cores (pellets) and the parameters shown in table 10 and its legend

**Table 9: Compositions of the coatings of coated edible products**

| Substance | Maize- trial [wt.-%] | Tapioca-trial [wt.-%] | Waxy-rice-trial 1 [wt.-%] | Waxy-rice-trial 2 [wt.-%] | Pea-trial [wt.-%] |
|---|---|---|---|---|---|
| xylitol | 62,0 | 60,0 | 62,0 | 62,0 | 62,0 |
| water | 37,5 | 37,5 | 37,5 | 37,5 | 37,5 |
| pregelatinized maize starch | 0,5 | | / | / | / |
| pregelatinized tapioca starch | / | 0,5 | / | / | / |
| pregelatinized waxy rice starch | / | / | 0,5 | / | / |
| pregelatinized waxy rice starch | / | / | / | 0,5 | / |
| Pregelatinized pea starch | / | / | / | / | 0,5 |

| | | | | | |
|---|---|---|---|---|---|
| (wt.-% in relation to total weight of substances) | | | | | |

**Table 10: process parameters**

| Parameters | Maize-trial | Tapioca-trial | Waxy-rice-trial 1 | Waxy-rice-trial 2 | Pea-trial |
|---|---|---|---|---|---|
| process time | 220 min | 208 min | 135 min | 138 min | 198 min |
| phases / cycles | 10/74 | 10/74 | 10/74 | 10/74 | 10/79 |
| amount of coating [wt.-% based on total weight of coated product] | 31,3 % | 30,7 % | 30,0 % | 30,1 % | 31,5 % |

| | | | | | |
|---|---|---|---|---|---|
| Coating temperature = 65 °C in a Driacoater Vario 500/600; air drying at 25 °C and 20 rH (% relative humidity) (for pea-trial: 20); rotation speed 16 to 18 rpm (rotation per minute), batch size: 2,5 kg | | | | | |

During the coating process in the Pea-trial an increased adhesiveness und agglomerate formation in comparison to all other trials in this example was observed. In particular, an increased abrasion at the corners of the chewing gum dragees occurred.

The Lab-values of the prepared coated edible products were measured according to the CIE system using a Minolta spectrophotometer CM-5..

The results are shown in table 11. As it can be seen, the coated edible products according to the present invention (Tapioca-trial, Waxy-rice-trial 1 (non-modified rice starch) and Waxy-rice-trial 2, chemically modified rice starch) surprisingly have higher L-values and a- and b-values closer to 0 than the comparative coated edible product (Maize-trial and Pea-trial). Thus, the coatings of the present invention exhibit less yellowness and are less greenish than the maize or pea gelatinzized starch coated products (compare to the L/a/b-diagram of figure 6). The pregelatinized rice and tapioca starches result in a whiter colour and therefore in an improved optical appearance compared to edible products comprising a pregelatinized maize or pea starch.

**Table 11: Lab-values of the coated edible products**

| | L^{∗} (D65) | a^{∗} (D65) | b^{∗} (D65) |
|---|---|---|---|
| Maize- trial | 87,75 | -0,90 | 6,80 |
| Tapioca-trial | 89,89 | -0,13 | 3,21 |
| Waxy-rice-trial 1 | 91,09 | -0,41 | 3,34 |
| Waxy-rice-trial 2 | 91,18 | -0,39 | 3,18 |
| Pea-trial | 85,58 | -1,57 | 4,14 |

| | | | |
|---|---|---|---|
| (D65: CIE standard illumination) | | | |

## Claims

1. A coated edible product comprising a core and a coating, wherein the coating comprises at least one pregelatinized starch selected from the group consisting of rice starch, potato starch, tapioca starch and combinations thereof, in particular rice starch.

2. The coated edible product of claim 1, wherein the coating contains no gum arabic (GA).

3. The coated edible product of claim 1 or 2, wherein the coating contains at most 3,5 wt.-% gum arabic, in particular from 0,1 to 3,5 wt.-% gum arabic (each based on dry weight of the coating).

4. The coated edible product according to any one of claims 1 to 3, wherein the coating comprises at least one sweetener.

5. The coated edible product according to any one of claims 1 to 4, wherein the coating comprises 0,1 to 20,0, preferably 0,2 to 1,5 wt.-% of the pregelatinized starch, and optionally 80,0 to 99,9 wt.-%, preferably 98,5 to 99,8 wt.-% of at least one sweetener (each based on dry weight of the coating).

6. The coated edible product according to any one of the preceding claims, wherein the pregelatinized starch is a pregelatinized native, pregelatinized thermally inhibited or pregelatinized modified starch.

7. The coated edible product according to any one of the preceding claims, wherein the pregelatinized starch is a pregelatinized waxy starch.

8. The coated edible product according to any one of the preceding claims, wherein the at least one sweetener is a sugar alcohol, in particular isomalt, xylitol, maltitol, erythritol, lactitol, mannitol, sorbitol or a combination thereof.

9. The coated edible product according to any one of the preceding claims, wherein the at least one sweetener is a sugar, in particular sucrose, glucose or isomaltulose.

10. The coated edible product according to any one of the preceding claims, wherein the coating comprises at least one additive, preferably selected from the group consisting of a flavouring, a starch, a high-intensity sweetener, an emulsifier, a colouring agent and a taste modifier.

11. The coated edible product according to any one of the preceding claims, wherein the coating comprises at least one additive, which is starch, preferably a powdered starch.

12. The coated edible product according to any one of the preceding claims, wherein the coated edible product is a confectionary product, in particular a coated chewing gum, a coated soft candy or a coated chocolate product, or a savoury product, in particular a coated nut, a coated fruit or a coated edible seed, preferably an almond.

13. A process for the preparation of a coated edible product comprising a core and a coating, wherein the coating comprises a pregelatinized starch selected from the group consisting of rice starch, potato starch, tapioca starch and combinations thereof, in particular according to any of claims 1 to 12, comprising the following process steps:
a) providing a core for an edible product and a coating medium, which coating medium comprises at least one pregelatinized starch selected from the group consisting of rice starch, potato starch, tapioca starch and combinations thereof, at least one sweetener and an aqueous medium,
b) coating the core with the coating medium and
c) obtaining the coated edible product.

14. The process of claim 13, wherein in step a) the provided coating medium contains no gum arabic or contains gum arabic.

15. The process according to claim 13 or 14, wherein in a step a1) prior to step a) a coating medium is prepared by mixing a pregelatinized starch selected from the group consisting of rice starch, potato starch, tapioca starch and combinations thereof, at least one sweetener and water to obtain the coating medium.

16. The process according to claim 15, wherein the pregelatinized starch selected from the group consisting of rice starch, potato starch, tapioca starch and combinations thereof, prior to step a1) is completely dissolved in cold water and added in step a1) to the other ingredients, in particular at least one sweetener, preferably as the last ingredient, to obtain the coating medium.

17. The process according to any one of claims 12 to 16, wherein the coating in step b) comprises at least one cycle, preferably 30 to 80 cycles, of applying the coating medium to the core in a step b1) to obtain a coating layer and subsequently drying the coating layer in a step b2).
